(19) **Europäisches Patentamt**
European Patent Office
Office européen des brevets

(11) **EP 1 595 137 B1**

(12) **EUROPÄISCHE PATENTSCHRIFT**

(45) Veröffentlichungstag und Bekanntmachung des Hinweises auf die Patenterteilung:
**28.04.2010 Patentblatt 2010/17**

(21) Anmeldenummer: **04709217.6**

(22) Anmeldetag: **09.02.2004**

(51) Int Cl.:
*G01N 21/85* (2006.01)     *G01J 3/10* (2006.01)
*G01N 21/25* (2006.01)     *G01N 21/53* (2006.01)

(86) Internationale Anmeldenummer:
**PCT/EP2004/001170**

(87) Internationale Veröffentlichungsnummer:
**WO 2004/070369 (19.08.2004 Gazette 2004/34)**

(54) **VERFAHREN UND VORRICHTUNGEN ZUR BESTIMMUNG UND ÜBERWACHUNG VON VERUNREINIGUNGSZUSTÄNDEN UNTERSCHIEDLICHER FLÜSSIGKEITEN**

METHOD AND DEVICES FOR DETERMINING AND MONITORING IMPURITY STATES IN DIFFERENT FLUIDS

PROCEDE ET DISPOSITIFS PERMETTANT DE DETERMINER ET SURVEILLER DES ETATS D'IMPURETES DANS DIFFERENTS FLUIDES

(84) Benannte Vertragsstaaten:
**AT BE BG CH CY CZ DE DK EE ES FI FR GB GR HU IE IT LI LU MC NL PT RO SE SI SK TR**

(30) Priorität: **07.02.2003 DE 10305093**

(43) Veröffentlichungstag der Anmeldung:
**16.11.2005 Patentblatt 2005/46**

(73) Patentinhaber: **BSH Bosch und Siemens Hausgeräte GmbH**
**81739 München (DE)**

(72) Erfinder:
• **KLOSE, Heinz**
  **26125 Oldenburg (DE)**
• **MALCHER, Stephan**
  **13409 Berlin (DE)**
• **ZIERKE, Fritz**
  **10318 Berlin (DE)**

(56) Entgegenhaltungen:
**EP-A- 1 111 333     WO-A-97/35178**
**US-A- 6 124 937     US-B1- 6 315 955**

EP 1 595 137 B1

**Beschreibung**

Die Erfindung betrifft ein Verfahren und eine Vorrichtung zur in-situ-Bestimmung und Überwachung von Verunreinigungszuständen von Flüssigkeiten und/oder bzw. zusätzlich zur Kontrolle von Flüssigkeitspegeln mit zumindest zwei Lichtquellen, einem Spektrometer oder einem ähnlichen optischen Empfänger an einem Steig- bzw. Durchflussrohr oder an einem Bypass und den weiteren Merkmalen des Oberbegriffs des Anspruchs 1 bzw. 12.

Ein solches Verfahren und eine solche Vorrichtung gehen hervor aus der WO 97/35178 A1" Dort ist ein Analysensystem beschrieben, welches zwei Lichtquellen mit einem Strahlteiler zum Zusammenführen der Strahlung der Lichtquellen, eine Küvette und ein Photodiodenarrayspektrometer aufweist, wobei die eine Lichtquelle eine mit Unterspannung zu betreibende Glühlampe und die andere Lichtquelle eine blaue Leuchtdiode ist, und wobei im Strahlengang zwischen der einen oder der anderen Lichtquelle und dem Photodiodenarrayspektrometer ein optisches Filter angeordnet ist, dessen spektraler Transmissionsverlauf dem Intensitätsabfall der Glühlampe und der Empfindlichkeitsabnahme des Photodiodenarrays zu niedrigen Wellenlängen entgegenwirkt. Das Analysensystem wird zur Anwendung bei der Messung von Hauptinhaltsstoffen oder Verunreinigungen in galvanischen Bädern eingesetzt.

Aus der EP 1 111 333 A1 geht eine Kombination einer Lichtquelleneinrichtung und eines Spektrometers zur Messung von Dicken dünner Schichten, insbesondere Schichten auf Halbleitersubstraten, hervor. Die Lichtquelleneinrichtung umfasst eine weiße und eine blaue Leuchtdiode, deren Licht mittels eines dichroitischen Spiegels kombiniert wird, und ein Spektrometer mit einem ortsvariabel durchlässigen optischen Filter aus einem strukturierten Dünnfilm auf einem Träger und einem CCD-Lichtempfänger.

Aus dem US-Patent 6,315,955 gehen eine Einrichtung und ein Verfahren zum Messen von in einer Flüssigkeit suspendierten Partikeln hervor. Dabei wird eine Vielzahl von an einer Küvette verteilt angeordneten Lichtquellen, insbesondere Leuchtdioden, und Lichtempfängern, insbesondere Photodioden, benutzt. Die Lichtquellen arbeiten alle in einem Wellenlängenbereich zwischen 880 nm und 950 nm. Die zu untersuchende Flüssigkeit kann insbesondere Milch oder ein anderes Molkereiprodukt, eine Blutprobe, ein Klebstoff oder eine Suspension von Pigmenten sein.

Die nachfolgend darzustellende Erfindung betrifft insbesondere ein Verfahren zur in-situ-Bestimmung und Überwachung von Verunreinigungszuständen von Flüssigkeiten und/oder bzw. zusätzlich zur Kontrolle von Flüssigkeitspegeln, das die Modifikationen des Emissionsspektrums einer weißen Lichtemitterdiode bei der Durchstrahlung von Flüssigkeiten insbesondere bei in ihnen vorhandenen Verunreinigungen im Vergleich mit den Spektren einer IRED bzw. einer UVED nachweist und für die Bestimmung von Konzentrationsveränderungen von Verunreinigungen und von Veränderungen der Verunreinigungsarten in Flüssigkeiten sowie Variationen der Flüssigkeitsniveaus in Steigrohren oder in einem Bypass geeignet ist.

Mit der Entwicklung von Lichtemitterdioden (LED) auf der Basis eines GaInN-Chips war es erstmals möglich, effiziente, blaues Licht emittierende Dioden herzustellen, was Anfang der 90er Jahre durch Nakamura in der japanischen Firma NICHIA demonstriert wurde [1]. Auf der Basis dieser Entwicklung war es nun möglich, die relativ alte Idee der Anregung von Phosphoreszenzschichten auf dem pn-Übergang zu realisieren, die schon in den 70er Jahren für den umgekehrten Vorgang der mehrstufigen Wandlung von infraroter Strahlung durch Luminophore auf pn-Übergängen von GaAs-Dioden sichtbares Licht zu erzeugen, was aber mit sehr kleinen äußeren Quantenausbeuten verbunden war, da es sich um einen Anti-Stokes-Prozess handelte.

Eine solche Diode, die sowohl das blaue Licht der Injektionslumineszenz als auch ein breites Photolumineszenzspektrum nutzt, das durch eine Anregung eines gewissen Anteils des blauen und folglich kurzwelligeren Lichtes erzeugt wird, wurde sowohl von Nakamura in der Firma NICHIA [1] als auch von Mitarbeitern des Freiburger Fraunhofer Instituts [2] vorgeschlagen. Entsprechende Patente zu weißen LED liegen vor [3], [4].

Inzwischen haben solche LED ein hohes Fertigungsniveau erreicht und werden in sehr hohen Stückzahlen von mehreren Herstellern vertrieben (NICHIA, GOSEY, OSRAM, AGILENT et al.). Solche LED besitzen die Eigenschaften schon seit langem gefertigter LED, d. h., sie weisen eine sehr hohe Einsatzlebensdauer auf (bis über 100.000 h), sind bis in den niedrigen Mikrosekundenbereich auch bei hohen Flussströmen ansteuerbar (Modulation bis in den hohen MHz-Bereich auch bei großen Flussströmem möglich), zeigen eine direkte Proportionalität zwischen Flussstromdichte und Anzahl der emittierten Photonen über mehrere Größenordnungen des Flussstroms, ermöglichen eine gute Einkopplung der Strahlung in Lichtwellenleiter (LWL) und sind sehr kostengünstig zu erwerben.

Die zur Nutzung heranziehbare, infrarote Strahlung emittierende Lumineszenzdiode auf der Basis von GaAlAs sollte eine Peakwellenlänge zwischen 800 und 900 nm aufweisen. Besondere Ansprüche bis auf einen kleinen Abstrahlwinkel werden nicht gestellt. Eine weitere verwendbare Emitterdiode mit einer Peakwellenlänge um 370 nm kann herangezogen werden, wenn Aussagen zur Lichtstreuung berücksichtigt werden sollen. Daher wird bei der vorliegenden Erfindung auf eine GaInN-UVED zurückgegriffen, da gegenwärtig keine anderen UV-Emitter auf der Basis von pn-Übergängen in Halbleitern zur Verfügung stehen. Der Vorteil einer solchen UVED besteht zum einen darin, dass herkömmliche Bypass- und Steigrohrmaterialien wie beispielsweise Glas oder Plastik um 370 nm gerade noch genügend transparent sind und zum anderen darin, dass ein Vergleich mit der oft verwendeten Hg-Linie bei 365 nm möglich wird.

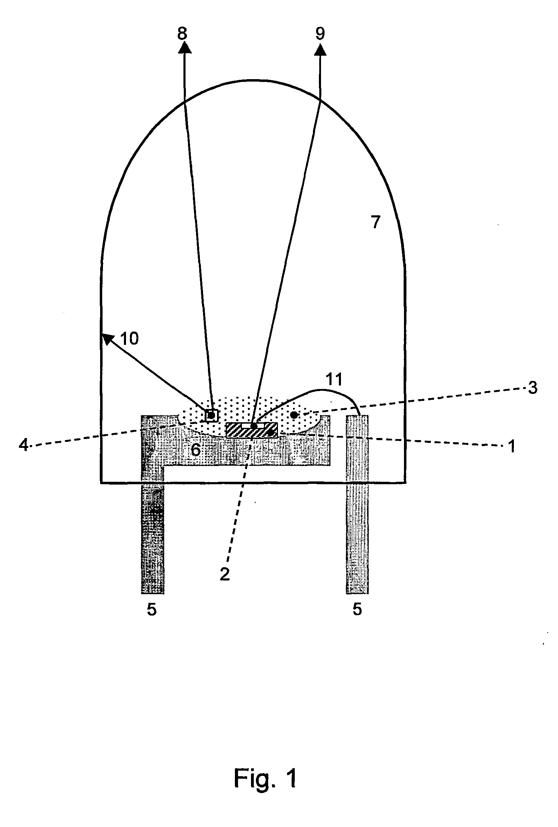

Der prinzipielle Aufbau einer weißen LED ist in Fig. 1 nach [5] schematisch dargestellt. Durch den in einem

GaInN-Chip 1 befindlichen pn-Übergang 2 wird ein Flussstrom gezogen, der zu einer Lichtemission im und in der unmittelbaren Nähe des pn-Übergangs durch die strahlende Rekombination der injizierten Elektronen und Löcher führt. Das blaue Licht wird isotrop in den Raum emittiert, von dem jedoch nur zentrierte Strahlen in eine gewünschte Richtung gelenkt werden können. Der Chip wird mit einem Epoxidharz 3 verschlossen, in dem organische oder anorganische Phosphore 4 eingebettet sind. Als Träger und für die Zuführung der Spannung fungieren die Elektroden 5 mit einer eingearbeiteten Kalotte 6. Für einen geschlossenen Stromkreis sorgt schließlich ein dünner Bonddraht 11, der kaum Einfluss auf die Lichtemission infolge seines kleines Durchmessers nimmt (Abschattung vernachlässigbar).

Zur Realisierung hoher äußerer Quantenausbeuten bringt man den Chip 1 in die verspiegelte Kalotte 6 ein, die als Hohlspiegel einen großen Teil der seitlichen und rückwärtsgerichteten Strahlung nach vorn reflektiert und fester Teil einer der Elektroden 5 ist. Damit weist die Injektionslumineszenz eine Richtcharakteristik auf, die durch den linsenförmigen Plastikdom 7 noch weiter gebündelt wird und Abstrahlwinkel von wenigen Grad bis zu 180° (in SMD-Bauelementen) erreichen kann.

Diese Abstrahlcharakteristik wird kaum durch eine Phosphoreszenzschicht 4, die aus einem Gemisch der organischen oder anorganischen Farbstoffe mit Epoxidharz 6 besteht und die Kalotte abdeckt, verändert. Durch die Absorption eines Teils des primären blauen Lichtes der Injektionslumineszenz im Farbstoff 4 wird eine Photolumineszenz 8, 10 hervorgerufen, die wieder isotrop in den Raum emittiert wird. Durch den linsenartigen Plastikdom wird eine Formung der Photolumineszenz nur unvollständig möglich, so dass nur Strahlen 8 gebündelt werden und nach vorn den Linsendom verlassen können. Im Vergleich zur Injektionslumineszenz 9 wird wegen der unterschiedlichen Orte der Lichtentstehung die Photolumineszenz eine etwas andere Richtcharakteristik aufweisen. Beide Lichtarten, d. h. die blaue Injektionslumineszenz und die langweiligere Photolumineszenz, werden vom Auge des Beobachters gemeinsam wahrgenommen, so dass infolge der additiven Farbmischung ein mehr oder weniger weißes Licht beobachtet wird, das entsprechend dem Blauanteil Farbtemperaturen zwischen 5.000 K und 20.000 K aufweisen kann.

Ein typisches Emissionsspektrum einer derartigen LED umfasst eine kurzwellige blaue Bande, die der Injektionslumineszenz entspricht, und eine langwelligere breitere Bande, die zur Photolumineszenz des Phosphors gehört.

Die Banden verändern sich mit dem Flussstrom. Bei gleichbleibender bzw. konstant gehaltener Empfindlichkeit des Empfängers erkennt man, daß die Kurve für 1 mA und die Kurve für 5 mA noch nicht voll ausgebildet sind. Verwendet man einen empfindlicheren Nachweisbereich, dann kann man den zu 10 mA und den zu 30 mA nahezu ebenbürtigen Zustand realisieren. Beim Einsatz der weißen LED muss man jedoch beachten, dass mit zunehmendem Flussstrom eine leichte Peakverschiebung zu beobachten ist. Da man aber meistens einen ausgewählten Flussstrom für eine Sensoreinstellung verwendet, spielt dies keine Rolle.

Bedingt durch die geringfügig unterschiedlichen Entstehungsorte beider Lichtarten muss bei unterschiedlichen Betrachtungswinkeln eine farbliche Veränderung auftreten, d. h. die Farbkoordinaten ändern sich mit dem Betrachtungswinkel. Da die Strahlungsintensität in Zenit- bzw. Geradeausrichtung am größten ist, bemerkt man diesen Effekt nur bei zielgerichteter Beobachtung.

Durch mehrere Druckschriften (DE 43 36 520 A1, DE 195 21 326 A1, DE 198 06 560 A1, DE 198 57 845 A1) sind bereits Vorrichtungen und Verfahren bekannt, durch die mittels Lichtemitterdioden Verunreinigungen vor allem in Waschflüssigkeiten für Wasch- oder Geschirrspülmaschinenen nach Art und Umfang oder der Pegel solcher Flüssigkeiten bestimmt werden. Dabei sind auch bereits Methoden bekannt, die Temperaturdrift der Dioden-Kennwerte zu kompensieren. Diese Vorrichtungen sind nach den zuvor dargestellten Bedingungen von Lichtemitterdioden ausgelegt.

Ziel der vorliegenden Erfindung ist es, die Auswertegenauigkeit solcher Verfahren und Vorrichtungen zu verbessern und zu vereinfachen.

Zum Erreichen dieses Ziels werden erfindungsgemäß ein Verfahren mit den Merkmalen des Anspruchs 1 und eine Vorrichtung mit den Merkmalen des Anspruchs 12 angegeben

Erfindungsgemäß wird das Ziel dadurch erreicht, dass die Veränderungen des Emissionsspektrums, zu denen die Peak-Intensitäten, die integralen Intensitäten des Gesamtspektrums und der ergänzten Einzelspektren der Injektionslumineszenz und der Photolumineszenz, die veränderten Anstiege der Flanken der Banden, die Verhältnisse der Peakwellenlängen und der integralen Intensitäten der Einzelspektren, die Verschiebung der Peakwellenlängen, verunreinigungsspezifische Absorptionen und selektive Anregungen von Verunreinigungen zur Fluoreszenz gehören, ausgewertet werden Erfindungsgemäß werden die Spektren inklusive der messbaren Veränderungen mit einem faseroptischen Kompaktspektrometer oder mit einem ähnlichen optoelektronischen Empfänger mittels Lichtwellenleiter nachgewiesen, wobei die Steuerung der Messprozedur, die Speicherung und die Bearbeitung sowie Auswertung mit einem Computer vorgenommen wird.

In der hier vorgestellten Erfindung wird im Gegensatz zu den bekannten Messmethoden immer ein eingrenzter Winkel der Abstrahlcharakteristik herangezogen, so dass der auftretende Fehler den Einsatz eines solchen Sensors nicht erschwert, zumal die Anfangsdaten der weißen LED nach Durchgang durch destilliertes Wasser oder Leitungswasser immer gespeichert und später zur Normierung herangezogen werden.

Für die Erfindung ist die Proportionalität der Intensität der primären Injektionslumineszenz zur Intensität der sekundären Photolumineszenz von entscheidender Bedeutung. Sie sollte im üblichen Betriebsbereich der LED, also im Bereich der Flussströme von etwa 0,1 mA bis 100 mA, hinreichend genau sein. Setzt man diese direkte Proportionalität in einem ausgewählten Flussstrombereich voraus, dann verändern sich die Intensitäten der Peakwellenlängen, die integralen Intensitäten beider Banden und die Halbwertsbreiten beider Emissionen gleichartig, d. h. man kann ohne ein modifizierendes Medium die Verhältnisse beider Banden als konstant betrachten. Das kann, wie oben schon bemerkt, immer zu Beginn der Messprozedur als Basiswert gespeichert werden.

Ein weiteres Problem beim Einsatz eines derartigen Sensors tritt infolge der Temperaturabhängigkeit der elektrischen Parameter von Halbleiterbauelementen auf. Setzt man voraus, dass unter Konstantstrombedingungen gearbeitet wird, dann ergibt sich für einen Flussstrom von etwa 5 mA ein Temperaturkoeffizient der Flußspannung $U_f$ von etwa 2,2 mV/K für die temperaturbedingte Flussspannungsvariation. Nimmt man an, dass beispielsweise eine Waschmaschine in einem Temperaturintervall von 5 °C bis 80 °C eingesetzt wird, dann würde sich, wenn die weißen und anderen LED auch diese Temperatur annehmen, die Flussspannung bei konstantem Flussstrom um etwa 165 mV ändern.

Dieser Wert kann durch eine Konstantstromeinspeisung ohne weiteres verkraftet werden, so dass bei Verwendung einer geeigneten Versorgungsquelle die Temperaturabhängigkeit der Kennlinien keinen großen Einfluss auf die Arbeitsweise des Sensors ausüben kann. Aus dieser Temperaturabhängigkeit ergibt sich aber auch ein besonderer Vorteil des Einsatzes solcher Halbleiteremitter. Setzt man den obigen Temperaturkoeffizienten der Flussspannung bei konstantem Flussstrom $I_f$ als bekannt voraus, dann kann in eine Regeleinheit zur Flussspannungskompensation sofort die Temperatur der LED eingegeben werden. Man hat also dadurch die Möglichkeit, Temperatureinflüsse zusätzlich zu gewinnen und sie sofort zur Korrektur der temperaturabhängigen Parameter zu nutzen.

Beachtet muss jedoch ferner werden, dass auch die Rekombinationseigenschaften von Halbleiterinjektionsdioden infolge der temperaturabhängigen Bandlücke einen Temperaturgang aufweisen. Die Verschiebung der Peakwellenlänge von GaInN-LED besitzt im allgemeinen einen Temperaturkoeffizienten von etwa 0,06 nm/K (siehe [1]), während GaAlAs-IRED einen größeren Wert von etwa 0,12 nm/K aufweisen. Bei einem Einsatz im obigen Temperaturintervall würde sich für die blaue Bande der weißen LED eine Peakwellenlängenverschiebung von maximal 4,5 nm ergeben. Nimmt man Raumtemperatur von 22°C als Ausgangswert, würde die Peakwellenlänge der weißen LED und der UVED bis zu 80°C sich maximal um 3,5 nm ändern, was im Auflösungsbereich von faseroptischen Billigkompaktspektormetern liegt. Für die IRED ergäbe sich ein Wert von etwa 9 nm.

Da die infrarote Bande sehr breit ist und ihr Spektrum immer nur als Vergleich herangezogen wird, ist die Peakverschiebung von untergeordneter Bedeutung. Die Abweichung der Peaks mit der Temperatur sollte jedoch in Ausnahmefällen bei der Auswertung der durch die Flüssigkeit mit ihren Verunreinigungen modifzierten Strahlung berücksichtigt werden, was durch die Temperaturangabe aus der oben diskutierten Flussspannungsänderung sofort möglich ist.

Die Erfindung betrifft nun die Nutzung solcher weißen LED, ergänzt durch UVED und/oder IRED, für den Nachweis von Verunreinigungszuständen und die Veränderung derselben in Flüssigkeiten derart, dass die LED an einem Bypass oder an einem Steig- bzw. Durchflussrohr, in denen eine ruhende Flüssigkeitssäule oder eine strömende Flüssigkeit vorhanden ist, angebracht werden, ihre Strahlungen nach dem Durchtritt durch die Flüssigkeit von einem Glas- oder Kunststofflichtlichtwellenleiter in ein faseroptisches Kompaktspektrometer oder in einen ähnlichen optoelektronischen Empfänger überführt werden und die Modifkation des transmittierten bzw. gestreuten Lichtes analysiert wird, wobei mindestens je eine LED in Geradeausrichtung und in 90°-Richtung angebracht werden und die Licht- bzw. Strahlungssignale gleichzeitig oder nacheinander an ein Spektrometer oder an einen ähnlichen optoelektronischen Empfänger gegeben werden. Je nach Schaltzustand wird eine Auswertung der licht- bzw. strahlungsemittierenden Dioden in Abhängigkeit vom Verunreinigungszustand der Flüssigkeit vorgenommen.

Anhand von mehreren in der Zeichnung dargestellten Ausführungsbeispielen ist die Erfindung nachstehend erläutert. in der Zeichnung zeigen

Fig. 1    eine schematische Darstellung des Aufbaus einer weißen LED,

Fig. 5    eine Anordnung der LED in einem ersten Ausführungsbeispiel,

Fig. 6    eine Anordnung der licht- bzw. strahlungsemittierende Dioden in einem zweiten Ausführungsbeispiel.

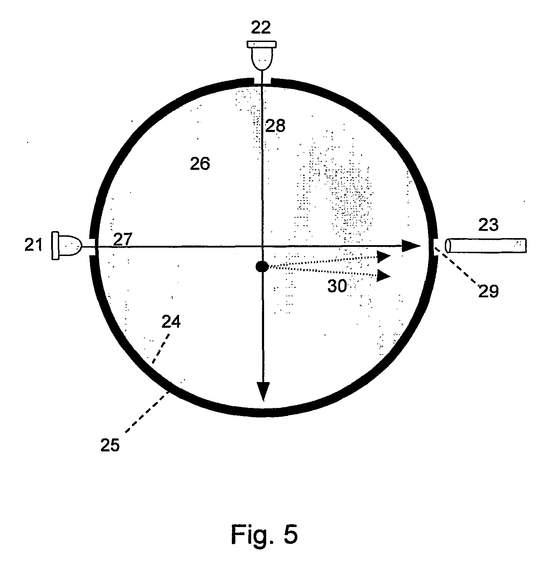

Im ersten Ausführungsbeispiel nach Fig. 5 werden die weißen LED 21, 22 an einem zylinderförmigen Bypass oder Steigrohr 24, der bis auf die Lichtdurchtrittsstellen geschwärzt 25 ist und so Reflexionen stark herabsetzt, um einen versetzten Winkel von 90° angebracht, deren schwach divergente Strahlen durch transparente Fenster 29 in die Flüssigkeit eindringen können, dort mit der Flüssigkeit 26 und/oder mit den Verunreinigungen wechselwirken können und nach Durchtritt durch das Fenster 29 in den Lichtwellenleiter 23 eindringen, der das Messsignal in ein Spektrometer oder in einen ähnlichen optoelektronischen Empfänger überführt.

Das von der LED 21 ausgehende Licht 27 wird durch Absorptionen und Streuungen geschwächt. Da es leicht divergent ist, erfolgt auch noch eine Aufspreizung der Strahlen. In die Empfängerfaser gelangt also nur ein Bruchteil der von der LED 21 ausgehenden Strahlung. Die messbare transmittierte Strahlung wird sich mit der Art der Flüssigkeit und in Abhängigkeit von ihren Verunreinigungen und deren Konzentration mehr oder weniger stark ändern. Wenn in einer Flüssigkeit Verunreinigungen vorhanden sind, kann an ihnen das Licht gestreut und selektiv absorbiert werden, was in bestimmten Fällen sogar zur Fluoreszenz von Verunreinigungen führen kann.

Solche Fluoreszenzen zeigen sich dann als Spektrenveränderungen in den langwelligen Schultern der Banden. Die Streuung des Lichtes bzw. der Strahlung hängt nun von der Größe der Streuzentren, von ihrer Symmetrie, ihrem Brechungsindex und von ihrer Konzentration ab. Sind die Streuzentren wesentlich kleiner als die Wellenlänge der gestreuten Strahlung, dann kann die Streuintensität durch die Rayleigh-Theorie beschrieben werden, die eine symmetrische cos-artige Intensitätsverteilung mit Werten zwischen 1 und 2 aufweist, wobei auf Polarisationseffekte hier nicht eingegangen werden soll. Ihre Intensität ist für eine konstante Winkeleinstellung der Wellenlänge umgekehrt proportional ($I(\lambda) = \text{const.} \; \lambda^{-n}$), wobei der Exponent n einen Wert von etwa 4,2 hat.

Um die gestreute Strahlung von der direkten Strahlung möglichst gut unterscheiden zu können, misst man häufig in 90°-Richtung. Da LED sehr billig sind und sich leicht elektronisch ein- und ausschalten lassen, wird anstelle des in 90°-Richtung notwendigen Lichtwellenleiters eine zweite weiße LED 22 angebracht, deren Strahlung 28 nicht direkt in den Lichtwellenleiter 23 gelangen kann, sondern von der schwarzen Wand 25 absorbiert wird. Dies hat auch den Vorteil, dass kein Multiplexer für die Lichtwellenleiter zum Spektrometer notwendig ist. Die gestreuten Strahlen 30 gelangen nun teilweise in den Lichtwellenleiter 23 und werden dem Empfänger zu geleitet.

Das einfache Ein- und Ausschalten der LED 21 und 22 gestattet es nun, sowohl das direkte transmittierte, durch die Flüssigkeit modifizierte Licht zu messen als auch das gestreute Licht 30 der LED 22 in 90°-Richtung zu registrieren. Man kann also Streu- und Absorptionseinflüsse durch das Medium Flüssigkeit getrennt und beim Einschalten beider LED auch gleichzeitig nachweisen. Der letztere Fall ist eine additive Kontrollmessung und dient zum Vergleich der Signale der einzeln eingeschalteten LED.

Werden die Streuzentren größer und größer und wird ihr Durchmesser allmählich vergleichbar mit der Wellenlänge der Primärstrahlung oder gar größer als dieselbe, dann kann die Intensitätsverteilung durch die Mie-Theorie beschrieben werden. Diese mathematisch anspruchsvolle Theorie enthält als Ausgangsparameter nur die Brechungsindizes des Mediums und der Streuzentren, die Größe der Streuzentren und ihre Symmetrie und stellt die allgemeine Lösung des kombinierten Beugungs- und Absorptionsproblems von Verunreinigungen in Medien mit einem Brechungsindex, der sich von dem der Verunreinigungen unterscheiden muss, dar. Das Ergebnis erhält man durch Reihenentwicklungen komplizierter Funktionen, wobei die Reihen schlecht konvergieren und daher eine sehr große Anzahl von Gliedern berücksichtigt werden muss, was heute im Zeitalter der schnellen Computer keine Beschränkung mehr darstellt.

Man erhält mit zunehmender Teilchengröße eine immer größere Intensität der gestreuten Strahlung in Vorwärtsrichtung bei gleichzeitiger schwacher Abhängigkeit von der Wellenlänge der verwendeten Strahlung, was dann gemäß Fig. 5 einen Zuwachs der direkten Strahlung 27 bedeutet. Man kann also bei entsprechender Verunreinigung beide Streuarten vergleichen und entsprechende Schlüsse bzgl. der Streuzentren und ihre Größe sowie Konzentration bei Verwendung des Verfahrens nach Fig. 5 ziehen. Verändert sich die Verunreinigungsart oder-konzentration, dann ergibt sich die prinzipielle Möglichkeit, die Spektren der Vorwärtsrichtung unterschiedlicher Zustände durcheinander zu dividieren, so dass die Veränderungen der Streu- und Absorptionseinflüsse sichtbar gemacht werden können.

Nachfolgend ist eine Spektrenmodifikation einer weißen LED durch unterschiedliche Wässer erläutert. Im Vergleich mit dem LED-Spektrum für Leitungswasser oder für Flusswasser bei Niedrigwasserstand eines norddeutschen Flusses (bei Ebbe) zeigt das LED-Spektrum gemessen an schwach verschmutztem Wasser sowohl eine starke Abnahme des kurzwelligen Peaks als auch eine Peakwellenlängenverschiebung der langwelligen Bande.

Diese gemessenen prinzipiellen Verhaltensweisen treten bei nicht extrem stark verunreinigten Flüssigkeiten immer wieder auf. Eie zu hohe Verunreinigungskonzentration führt allerdings zu solch hohen Absorptionen, die kein direktes bzw. gestreutes Licht mehr passieren lassen und folglich keine Messung mehr ermöglichen.

Nachfolgend sind vier Spektren einer weißen LED erläutert, die an bewusst verunreinigtem Wasser aufgenommen wurden. Verglichen werden Spektren des normalen Leistungswassers (Berliner Wasser: Härte etwa 18°dH), und Spektren mit Verunreinigungen von Schmutz in Wasser, wobei der Schmutz nach unterschiedlichen Lösungszeiten aus Testgeweben von EMPA (St. Gallen) sich in Wasser löste. Ein weiteres Spektrum wurde dadurch gewonnen, dass noch zusätzlich Rotwein ins schon leicht verschmutzte Wasser gegeben wurde.

Man erkennt

(i) eine Peakwellenlängenverschiebung des blauen Peaks,

(ii) eine Verschiebung der maximalen Peakwellenlänge der langwelligeren Bande,

(iii) eine unterschiedliche Abnahme der Intensitäten,

(iv) veränderte Anstiege der kurzwelligen Flanken beider Banden, und

(v) dass die Flächen der einzelnen Spektren sowie die Flächenverhält-nisse der rekonstruierten Einzelspektren (rekonstruierte gaußähnliche Kurven unter Berücksichtigung der Schiefe) unterschiedlich sind.

Beispielsweise ändern sich die Peakverhältnisse zwischen der längerwelligen Bande zur blauen Emission der Kurven 47 bis 44 von 2,10 über 2,48 und 2,83 bis zu 3,30, was nach einer entsprechenden Eichung sehr gute Schwellenwerte für eine in-situ-Optimierung von Prozessen darstellt. Ähnliche Verhältnisse treten für die anderen genannten Parameter ebenfalls auf.

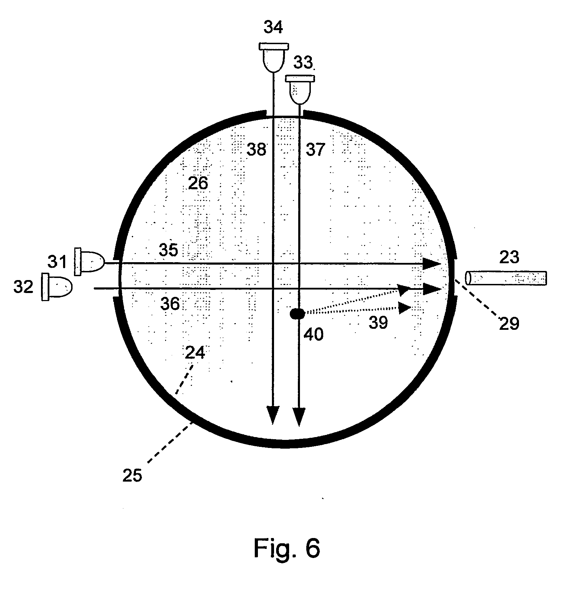

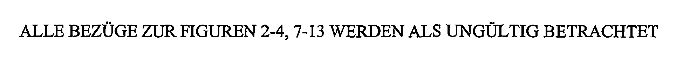

Das zweite Ausführungsbeispiel gemäß Fig. 6 nutzt nun ebenfalls weiße LED und auch Infrarot-Emitter, die beispielsweise eine infrarote Strahlung mit einer Peakwellenlänge von etwa 860 nm emittieren, und wahlweise auch UVED mit einer Peakwellenlänge um etwa 370 nm. Gemäß Fig. 6 sind am Bypass 24 mit einer entsprechenden Schwärzung 25 je eine weiße LED 31 bzw. 33 angebracht wie im obigen Beispiel, wobei durch die Fenster 29 eine Messung des transmittierten Lichts 35 und des gestreuten Lichtes 39 des Primärstrahls 37 mittels eines Lichtwellenleiters 23 (LWL) und eines Empfänger möglich ist. Durch unterschiedliche Schaltzustände der beiden Dioden kann wie oben Transmission und Streuung gemessen werden. An den Positionen 32 und 34 können nun IRED oder wahlweise UVED angebracht werden, wobei auch eine Kombination beider an diesen Positionen möglich ist. Sie können die Strahlen 36 bzw. 37 aussenden. Ihre Strahlung kann direkt aus der Position 32 und als Streustrahlung von den Streuzentren 40 aus, verursacht aus der Position 34, registriert werden.

Folgende Messabläufe sind nun wahlweise möglich:

Analog zum ersten Beispiel sind auch alle Messarten wie oben diskutiert enthalten. Fügt man zu den weißen LED die IRED hinzu, dann können als Kontrolle immer die Infrarot(IR)-Spektren gemessen werden, was bei kaum verändertem IR-Spektrum der IRED 34 aber stark verändertem Spektrum der weißen LED 33 eindeutige Aussagen zur Strahlungsstreuung zulässt. Ist die Lichtabsorption und Streuung schon sehr groß, gewinnt man zusätzlich aus den Daten der weißen LED 31 und der IRED 32 noch Aussagen zur Vorwärtsstreuung und der wellenlängenabhängigen Absorption, die infolge der unterschiedlichen Verunreinigungen im Infraroten eindeutig unterschiedlich zum Kurzwelligen ist. Setzt man anstelle der IRED auf die Positionen 32 und 33 UVED, dann lassen sich wirksame kurzwellige Absorptionen und insbesondere die im Kurzwelligen sehr wirksame Rayleigh-Streuung gut detektieren. Eine Kombination von je einer IRED und einer UVED erschließt letztendlich alle nachweisbaren Absorptionen und Streuungen in Geradeausrichtung und in 90°-Richtung. Da alle LED, IRED und UVED in Synchronisation mit dem Spektrometer vom Computer, der nicht in der Zeichnung nicht dargestellt ist, programmgemäß schnell schaltbar sind, kann bei kleinen Integrationszeiten in etwa einer Sekunde die Messung in allen Verknüpfungen ausgeführt werden. Der Kostenaufwand gegenüber dem ersten Ausführungsbeispiel ist vernachlässigbar (einige EURO), was die letztere Variante als universellen Sensor empfiehlt.

Ein weiteres Ausführungsbeispiel ausgehend von Fig. 5 und 6 ist nachfolgend anhand von Messergebnissen von mit Rotwein definiert verunreinigtem Berliner Leitungswasser erläutert. Der Wert des Maximums für Leitungswasser beträgt für den Peak bei 458,4 nm etwa 1629 relative Einheiten (r. E.), während er für den Peak der Photolumineszenz bei 549,4 nm rund 3391 r. E. beträgt. Entscheidende Veränderungen treten bei der Zugabe von Rotwein auf. Gemessen wurde die Transmission durch eine Mischung von Leitungswasser und Rotwein von 6:1, 5:1, 3:1 und 2:1. Die Peakwellenlänge der blauen Bande verschiebt sich mit der Rotweinkonzentration gegenüber dem Leituhgswasserwert nicht (458,4 nm), obwohl ihre Intensität auch deutlich abnimmt. Anders verhält sich die langwelligere Bande, die sowohl intensitätsmäßig beeinflusst wird als auch eine Peakverschiebung aufweist. Die Werte sind unten angegeben.

| | $\lambda_{p2}$ (nm) | Int $P_1$ (r. E.) | Int $P_2$ (r. E.) | $P_2$:$P_1$ |
|---|---|---|---|---|
| Leitungswasser | 549,4 | 1629 | 3391 | 2,08 |
| Wasser zu Rotwein 6:1 | 575,8 | 717,7 | 2025 | 2,82 |
| Wasser zu Rotwein 5:1 | 579,7 | 568 | 1849 | 3,15 |
| Wasser zu Rotwein 3:1 | 598,5 | 320 | 1434 | 4,48 |
| Wasser zu Rotwein 2:1 | 609,8 | 176 | 1162 | 6,62 |

Man erkennt sehr gut die geringere Transmission im Roten und die stärkere im Blauen. Wir haben es in diesem Falle mehr mit selektiver Absorption denn mit Streueffekten zu tun. Die Wertedifferenzen sind sehr groß; so können Sensoren gut angesprochen werden.

Die Peakverschiebung im Bereich der langwelligen Bande beträgt etwa 60 nm, was für einen Sensor ein sehr gut nachweisbares Signal darstellt. Zieht man noch die Flächen der kurzwelligen Bande von der kurzwelligen Grenze bis zum Minimum (etwa bei 490 nm) ($A_{b1}$ bis $A_{b4}$) und der langwelligen Bande von 490 nm bis ins nahe Infrarot ($A_{g1}$ bis

$A_{g4}$) zu Rate, dann erhält man folgende Werte:

$$A_{g1} : A_{b1} \quad = \quad 9,9$$

$$A_{g2} : A_{b2} \quad = \quad 11,2$$

$$A_{g3} : A_{b3} \quad = \quad 15,6$$

$$A_{g4} : A_{b4} \quad = \quad 21,6$$

Auch die Anstiege der langwelligen Bande sind für die Verfolgung der Verunreinigungskonzentration und -art auswertbar. Sie ändern sich bei beispielsweise bei 517 nm folgendermaßen:

| | |
|---|---|
| Wasser zu Rotwein 6:1 | 2,5 |
| Wasser zu Rotwein 5:1 | 1,6 |
| Wasser zu Rotwein 3:1 | 0,9 |
| Wasser zu Rotwein 2:1 | 0,5 |

Wie man außerdem leicht erkennt, bleibt der langwellige Teil der Photolumineszenzbande von etwa 650 nm an nahezu unverfälscht konstant.

Damit stehen die Peakverschiebungen, die Anstiege der Banden, die Flächenverhältnisse, die Intensitätsverhältnisse, die Halbwertsbreiten (soweit erkennbar bzw. identifizierbar) und selektive Absorptionen und Emissionen für die Verunreinigungssensorik zur Verfügung.

Eine weitere Stütze der genannten Ausführungsbeispiele ist durch Messungen an den Emissionen einer weißen LED und einer IRED an rotweinhaltigem Leitungswasser gegeben. Aus den Veränderungen der Spektren, hier tritt in der Bande kaum eine Absorption oder Streuung auf, kann man auf die Verunreinigung bzw. den Grad der "Verschmutzung" schließen.

Das bringen auch Streuspektren zum Ausdruck. Sie wurden an milchhaltigem Wasser aufgenommen. Dargestellt sind die Intensitäten der 90°-Streuung in r. E. Während das Spektrum der weißen LED stark modifiziert wurde, treten in der IR-Bande keine wesentlichen Strukturänderungen auf. Wir haben es in diesem Falle mit der nahezu wellenlängenunabhängigen Mie-Streuung zu tun. Aus den Veränderungen der Spektren in Bezug auf "reines" Leitungswasser lassen sich eindeutige Aussagen zum Grad und zur Art der "Verschmutzung" machen.

Ein weiteres Anwendungsbeispiel wird nachfolgend veranschaulicht. Hier wurden eine weiße LED und eine UVED in den Positionen 31 und 32 der Fig. 6 verwendet. Die Spektren der Dioden nach dem Durchgang ihrer Strahlung durch normales Leitungswasser wurden gemessen. Gut zu erkennen sind die Peaks der UVED 60 und der weißen LED, sowie Peaks der 2. Ordnung der UV-Emission bei 375 nm bzw. der blauen Bande bei etwa 470 nm, die vom Spektrometer ebenfalls nach dem Durchgang durch die Flüssigkeit registriert werden. Auch sie können zur Auswertung herangezogen werden. Betrachtet man jetzt die strukturellen Veränderungen bei Flusswasser, dann stellt man eine starke Reduzierung der kurzwelligen Banden und folglich der jeweiligen 2. Ordnung beider Banden fest. Hierzu benötigt man keine Vergleiche der Absolutwerte der Spektren, die aus diesem Grunde auch nicht aufgenommen wurden. Der Vorteil ergibt sich daraus, dass man bei nur leicht veränderter Empfindlichkeit des Spektrometers oder der faseroptischen Verbindungselemente nicht auf Absolut-messungen angewiesen ist. Das ist gerade der große Vorteil der vorliegenden Erfindung.

Bezeichnet man die Intensitäten der Maxima der einzelnen Banden mit $I_1$ bis $I_5$ vom Kurzwelligen angefangen, dann erhält man für Leitungswasser bzw. für Flusswasser folgende Daten.

| | Luft | Leitungswasser | Flusswasser |
|---|---|---|---|
| $I_2{:}I_1 =$ | 0,99 | 1,43 | 3,04 |
| $I_3{:}I_1 =$ | 1,10 | 1,40 | 8,96 |
| $I_3{:}I_2 =$ | 1,11 | 0,98 | 2,94 |
| $I_1{:}I_4 =$ | 4,04 | 4,02 | 2,69 III |
| $I_1{:}I_5 =$ | 50,68 | 34,16 | 15,86 |
| $I_2{:}I_4 =$ | 4,01 | 5,75 | 7,24 |

(fortgesetzt)

|  | Luft | Leitungswasser | Flusswasser |
|---|---|---|---|
| $I_2{:}I_5 =$ | 50,26 | 48,87 | 48,24 III |
| $I_3{:}I_4 =$ | 4,43 | 5,64 | 21,31 |
| $I_3{:}I_5 =$ | 55,55 | 47,86 | 142,05 |
| $I_4{:}I_5 =$ | 12,55 | 8,49 | 6,67 |

Aus dem Vergleich der obigen Wertetabelle erkennt man, dass die Daten der 2. Ordnung für die UVED nahezu gleiche Werte liefern, dass aber der Wert beim Flusswasser infolge der Streuung im UV abgeschwächt gegenüber dem normalen Wasser ist. Bei der 2. Ordnung der blauen Bande tritt nur noch eine sehr geringe Abweichung in der 2. Ordnung gegenüber bei normalem Wasser auf, was auf einen schwachen Streueffekt im Blauen hindeutet, aber auch durch Messfehler teilweise bedingt sein kann. Wie oben also schon angedeutet, kann die jeweils 2. Ordnung der UVED und der blauen Bande der weißen LED helfen, Streueinflüsse sehr schnell zu erkennen. Im übrigen sind die Differenzen zwischen den unterschiedlichen Wässern in nahezu allen Verhältnissen relativ groß, so dass bei entsprechenden Eichungen eindeutige Schwellenwerte für Prozeßoptimierungen und Steuerungen sowie Überwachungen zur Verfügung stehen.

**Literaturhinweise**

[1] S. Nakamura and G. Fasol: "The Blue Laser Diode", Springer-Verlag, Berlin 1997.
[2] P. Schlotter, R. Schmidt and J. Schneider: "Luminescence or blue light emitting diodes", Appl. Phys. A64(1997), pg. 417-418.
[3] DE 196 25 622 A1, OT: 02.01.1998; U. Reeh et al.: "Lichtanstrahlendes Halbleiterbauelement mit Lumineszenzkonversionselement".
[4] DE 196 38 667 A1, OT: 02.04.1998; P. Schlotter et al.: "Mischfarbiges Licht abstrahlendes Halbleiterbauelement mit Lumineszenzkonversionselement".
[5] J. Baur, P. Schlotter and J. Schneider: "White light emitting diode", Festkörperprobleme 37(1998), 67-78.

**Patentansprüche**

1. Verfahren zur in-situ-Bestimmung und Überwachung von Verunreinigungszuständen von Flüssigkeiten (26) und/ oder bzw. zusätzlich zur Kontrolle von Flüssigkeitspegeln mit zumindest zwei Lichtquellen (21, 22, 31, 33; 32, 34) und einem Spektrometer oder einem ähnlichen optoelektronischen Empfänger an einem Steig- bzw. Durchflussrohr (24) oder an einem Bypass (24), wobei das durch die Flüssigkeit (26) oder/und durch die bewusst oder unbewusst in die Flüssigkeit (26) eingebrachte Verunreinigungen modifizierte Emissionsspektrum der Lichtquellen (21, 22, 31, 33; 32, 34) ausgewertet wird,
**dadurch gekennzeichnet,**

   - **dass** die Lichtquellen (21, 22, 31, 33; 32, 34) eine weiße Lichtemitterdiode (21, 22, 31, 33), sowie in Ergänzung dazu eine infrarote bzw. ultraviolette Strahlung emittierende Halbleiterinjektionsdiode (32, 34) umfassen,
   - wobei die weiße Lichtemitterdiode (21, 22, 31, 33) eine Injektionslumineszenz und eine Photolumineszenz aufweist, deren Intensitäten innerhalb eines ausgewählten Flussstrombereichs, insbesondere im Bereich der Flussströme von 0,1 mA bis 100 mA, eine Proportionalität aufweisen, die hinreichend genau ist,
   - **dass** die Strahlungen (27, 28, 35, 36, 37, 38) der Lichtquellen (21, 22, 31, 33; 32, 34) nach dem Durchtritt durch die Flüssigkeit (26) von einem Lichtwellenleiter (23) oder einem Lichtleiter in das Spektrometer oder in den ähnlichen optoelektronischen Empfänger überführt werden und
   - **dass** die Modifikation der transmittierten und der gestreuten Strahlung (30) der Lichtquellen (21, 22, 31, 33; 32, 34) in Abhängigkeit vom Ein- und Ausschaltzustand der Lichtquellen (21, 22, 31, 33; 32, 34) und in Abhängigkeit der Position der Lichtquellen (21, 22, 31, 33; 32, 34) ausgewertet werden.

2. Verfahren nach Anspruch 1, **gekennzeichnet dadurch, dass** je eine von einer weißen LED (21, 22, 31, 33) erzeugte Strahlung in den Bypass (24) oder das Steig- bzw. Durchflussrohr (24) um 90° versetzt eingestrahlt wird, um sowohl die Transmission als auch die Streuspektren in 90°-Richtung messen zu können.

3. Verfahren nach Anspruch 2, **gekennzeichnet dadurch, dass** zum besseren Nachweis der wellenlängenabhängigen Strahlungsstreuung parallel zu der durch die weißen LED (21, 22, 31, 33) noch Strahlung je einer ultraviolette Diode (UVED) (32, 34) eingestrahlt wird, die dann zu einem noch eindeutigeren Streunachweis führt, da die Streuintensität schnell mit abnehmender Wellenlänge zunimmt.

4. Verfahren nach Anspruch 2 oder 3, **gekennzeichnet dadurch, dass** parallel zur durch die weiße LED (21, 22, 31, 33) erzeugten noch eine Strahlung je einer IRED (32, 34) eingestrahlt wird, damit die wellenlängenabhängigen Absorptions- und Streuprozesse infolge der Verunreinigungen eindeutiger interpretierbar werden.

5. Verfahren nach Anspruch 3 oder 4, **gekennzeichnet dadurch, dass** die Flussspannung bei konstantem Flussstrom einer der weißen LED (21, 22, 31, 33) oder auch der anderen verwendeten IRED (32, 34) bzw. UVED (32, 34) überwacht und zueinander in Beziehung gesetzt sowie daraus eine Temperaturangabe gewonnen wird und Flussspannungsänderungen zur Korrektur der temperaturabhängigen Spektrenverschiebung über ein Regelglied herangezogen werden.

6. Verfahren nach einem der Ansprüche 3 bis 5, **gekennzeichnet dadurch, dass** alternierend zu den Strahlungen der weißen LED (21, 22, 31, 33) je eine Strahlung einer UVED (32, 34) und einer IRED (32, 34) eingestrahlt wird, um sowohl Streu- als auch Absorptionsprozesse zur Kontrolle und Regelung bereit zu stellen.

7. Verfahren nach einem der vorstehenden Ansprüche , **gekennzeichnet dadurch, dass** die Flussspannungen für die LED (21, 22, 31, 33), UVED (32, 34) und IRED (32, 34) gepulst werden, damit Strahlungsveränderungen aufgrund von Oberflächenveränderungen in den Messbehältern (24) wahrgenommen werden können.

8. Verfahren nach einem der vorstehenden Ansprüche, **gekennzeichnet dadurch, dass** die Flussspannungen der LED (21, 22, 31, 33), UVED (32, 34) und IRED (32, 34) moduliert werden, um mit selektiv empfindlichen Verstärkern und/oder Empfängern unterschiedliche Gruppen von Emittern unterscheiden zu können.

9. Verfahren nach einem der vorstehenden Ansprüche, **gekennzeichnet dadurch, dass** die Peaks, die Peakverschiebungen, die integralen Intensitäten, die Peakverhältnisse zueinander, die veränderten Anstiege aller Flanken der Banden, die integralen Intensitäten des blauen Spektrums der Injektionslumineszenz und des Spektrums der Photolumineszenz der gaußförmig ergänzten Kurven und die Halbwertsbreiten aus dem Spektrometerdaten in situ mit einem schnellen PC ausgewertet werden, durch den außerdem eine Optimierung und/oder Steuerung des laufenden Prozesses erfolgt.

10. Verfahren nach Anspruch 9, **gekennzeichnet dadurch, dass** die jeweilige 2. Ordnung jedes Spektrums zur Auswertung und insbesondere zum Intensitätsvergleich herangezogen wird.

11. Verfahren nach Anspruch 10, **gekennzeichnet dadurch, dass** die Spektren beispielsweise in Vorwärtsrichtung bei Veränderung des Flüssigkeitszustands, z.B. Veränderung der Verunreinigungen und ihrer Konzentrationen, durcheinander dividiert oder subtrahiert werden, so dass die Streu- und Absorptionsveränderungen besser sichtbar gemacht werden können.

12. Vorrichtung zur in-situ-Bestimmung und Überwachung von Verunreinigungszuständen von Flüssigkeiten (26) und/oder bzw. zusätzlich zur Kontrolle von Flüssigkeitspegeln, umfassend zumindest zwei Lichtquellen (21, 22, 31, 33; 32, 34), ein Spektrometer (34) oder einem ähnlichen optoelektronischen Empfänger an einem Steig- bzw. Durchflussrohr (24) oder an einem Bypass (24) und einen Computer zur Auswertung des durch die Flüssigkeit (26) oder/und durch die bewusst oder unbewusst in die Flüssigkeit (26) eingebrachte Verunreinigungen modifizierte Emissionsspektrums der Lichtquellen (21, 22, 31, 33; 32, 34),
**dadurch gekennzeichnet,**

- **dass** die Lichtquellen (21, 22, 31, 33; 32, 34) eine weiße Lichtemitterdiode (21, 22, 31, 33) sowie in Ergänzung dazu eine infrarote bzw. ultraviolette Strahlung emittierende Halbleiterinjektionsdiode (32, 34) umfassen,
- wobei die weiße Lichtemitterdiode (21, 22, 31, 33) eine Injektionslumineszenz und eine Photolumineszenz aufweist, deren Intensitäten innerhalb eines ausgewählten Flussstrombereichs, insbesondere im Bereich der Flussströme von 0,1 mA bis 100 mA, eine Proportionalität aufweisen, die hinreichend genau ist,
- **dass** ein Lichtwellenleiter (23) oder Lichtleiter umfasst ist, mittels dem die Strahlungen (27, 28, 35, 36, 37, 38) der Lichtquellen (21, 22, 31, 33; 32, 34) nach dem Durchtritt durch die Flüssigkeit (26) von dem Lichtlichtwellenleiter (23) oder dem Lichtleiter in das Spektrometer oder in den ähnlichen optoelektronischen Empfänger überführbar sind und

- **dass** der Computer zur Auswertung der Modifikation der transmittierten und der gestreuten Strahlung (30) der Lichtquellen (21, 22, 31, 33; 32, 34) in Abhängigkeit vom Ein- und Ausschaltzustand der Lichtquellen (21, 22, 31, 33; 32, 34) und in Abhängigkeit der Position der Lichtquellen (21, 22, 31, 33; 32, 34) ausgebildet ist.

13. Vorrichtung nach Anspruch 12, **gekennzeichnet dadurch, dass** mindestens zwei weiße LED (21, 22, 31, 33) am Bypass (24) oder Steig- bzw. Durchflussrohr (24) zueinander um 90° versetzt angebracht sind.

14. Vorrichtung nach Anspruch 13, **gekennzeichnet dadurch, dass** parallel zu den weißen LED (21, 22, 31, 33) noch je eine ultraviolette Diode (UVED) (32, 34) angebracht ist.

15. Vorrichtung nach Anspruch 13 oder 14, **gekennzeichnet dadurch, dass** parallel zu den weißen LED (21, 22, 31, 33) noch je eine IRED (32, 34) angebracht ist.

16. Vorrichtung nach Anspruch 14 oder 15, **gekennzeichnet dadurch, dass** parallel zu den weißen LED (21, 22, 31, 33) alternierend je eine UVED (32, 34) und eine IRED (32, 34) angebracht sind.

17. Vorrichtung nach einem der Ansprüche 13 bis 16, **dadurch gekennzeichnet, dass** für jeden Strahlungsemitter (21, 22, 31, 33; 32, 34) am Bypass (24) oder am Steig- bzw. Durchflussrohr (24) ein transparenter Bereich (29) vorgesehen ist, der von einem geschwärzten Bereich (25) am Behälter (24) umgeben ist.

18. Vorrichtung nach einem der Ansprüche 13 bis 16, **dadurch gekennzeichnet, dass** mindestens ein Teil der Strahlungsemitter (21, 22, 31, 33; 32, 34) vom Messbehälter (24) entfernt angeordnet und über Lichtwellenleiter (34) aus Quarz, Glas oder Plastik (POF) mit den Einkoppelstellen (29) am Messbehälter (24) optisch gekoppelt ist.

**Claims**

1. Method for in situ determination and monitoring of contamination states of liquids (26) and/or and additionally for the checking of liquid levels by at least two light sources (21, 22, 31, 33; 32, 34) and a spectrometer or a similar optoelectronic receiver at a riser pipe or throughflow pipe (24) or at a bypass (24), wherein the emission spectrum, which is modified by the liquid (26) and/or by the contaminants intentionally or unintentionally introduced into the liquid (26), of the light sources (21, 22, 31, 33; 32, 34) is evaluated, **characterised in that**

   - the light sources (21, 22, 31, 33; 32, 34) comprise a white-light emitting diode (21, 22, 31, 33) as well as additionally thereto a semiconductor injection diode (32, 34) emitting infrared or ultraviolet radiation,
   - wherein the white-light emitting diode (21, 22, 31, 33) has an injection luminescence and a photoluminescence, the intensities of which have within a selected flux range, particularly in the range of fluxes of 0.1 mA to 100 mA, a proportionality which is sufficiently precise,
   - the radiations (27, 28, 35, 36, 37, 38) of the light sources (21, 22, 31, 33; 32, 34) after passage through the liquid (26) are transmitted by an optical waveguide (23) or an optical conductor to the spectrometer or the similar optoelectronic receiver and
   - the modification of the transmitted and dispersed radiation (30) of the light sources (21, 22, 31, 33; 32, 34) is evaluated in dependence on the switch-on and switch-off state of the light sources (21, 22, 31, 33; 32, 34) and in dependence on the position of the light sources (21, 22, 31, 33; 32, 34).

2. Method according to claim 1, **characterised in that** a respective radiation, which is generated by a white-light emitting diode (21, 22, 31, 33), is radiated into the bypass (24) or the riser pipe or throughflow pipe (24) displaced through 90° so as to be able to measure not only the transmission, but also the dispersion spectra in 90° direction.

3. Method according to claim 2, **characterised in that** - for better evidencing of the wavelength-dependent radiation dispersion - in addition, in parallel with that by the white-light emitting diode (21, 22, 31, 33), radiation of a respective ultraviolet diode (UVED) (32, 34) is radiated in, which then leads to even clearer dispersion evidence, since the dispersion intensity rapidly increases with decreasing wavelengths.

4. Method according to claim 2 or 3, **characterised in that** in addition, in parallel to the radiation generated by the white-light emitting diode (21, 22, 31, 33), radiation of a respective IRED (32, 34) is radiated in so that the wavelength-dependent absorption and dispersion processes in consequence of the contaminations can be more clearly interpreted.

5. Method according to claim 3 or 4, **characterised in that** the flux voltage at a constant flux of one of the white-light emitting diodes (21, 22, 31, 33) or also the other IREDs (32, 34) or UVEDs (32, 34) used is monitored and correlated and a temperature statement is obtained therefrom and flux voltage changes are utilised for correction of the temperature-dependent spectral displacement by way of a regulating element.

6. Method according to any one of claims 3 to 5, **characterised in that** alternately to the radiations of the white-light emitting diodes (21, 22, 31, 33) a respective radiation of a UVED (32, 34) and an IRED (32, 34) is radiated in in order to provide not only dispersion processes, but also absorption processes for checking and regulation.

7. Method according to any one of the preceding claims, **characterised in that** the flux voltages for the LEDs (21, 22, 31, 33), UVEDs (32, 34) and IREDs (32, 34) are pulsed so that radiation changes due to surface changes in the measuring containers (24) can be perceived.

8. Method according to any one of the preceding claims, **characterised in that** the flux voltages of the LEDs (21, 22, 31, 33), UVEDs (32, 34) and IREDs (32, 34) are modulated so as to be able to differentiate different groups of emitters by selectively sensitive amplifiers and/or receivers.

9. Method according to any one of the preceding claims, **characterised in that** the peaks, peak displacements, integral intensities, peak relationships to one another, changed rises of all flanks of the bands, integral intensities of the blue spectrum of the injection luminescence and of the spectrum of the photoluminescence of the Gaussian-supplemented plots and half-widths from the spectrometer data are evaluated in situ by a rapid PC by which in addition an optimisation and/or control of the continuing process is carried out.

10. Method according to claim 9, **characterised in that** the respective 2nd order of each spectrum is utilised for evaluation and, in particular, for intensity comparison.

11. Method according to claim 10, **characterised in that** the spectra are, for example, divided by one another or subtracted in forward direction when change in the liquid state occurs, for example change in the contaminations and concentrations thereof, so that the dispersion and absorption changes can be made better visible.

12. Device for in situ determination and monitoring of contamination states of liquids (26) and/or and additionally for the checking of liquid levels, comprising at least two light sources (21, 22, 31, 33; 32, 34), a spectrometer (34) or a similar optoelectronic receiver at a riser pipe or throughflow pipe (24) or at a bypass (24) and a computer for evaluation of the emission spectrum, which is modified by the liquid (26) and/or by the contaminations intentionally or unintentionally introduced into the liquid (26), of the light sources (21, 22, 31, 33; 32, 34),
**characterised in that**

- the light sources (21, 22, 31, 33; 32, 34) comprise a white-light emitting diode (21, 22, 31, 33) as well as additionally thereto a semiconductor injection diode (32, 34) emitting infrared or ultraviolet radiation,
- wherein the white-light emitting diode (21, 22, 31, 33) has an injection luminescence and a photoluminescence, the intensities of which have within a selected flux range, particularly in the range of fluxes of 0.1 mA to 100 mA, a proportionality which is sufficiently precise,
- an optical waveguide (23) or optical conductor is included, by means of which the radiations (27, 28, 35, 36, 37, 38) of the light sources (21, 22, 31, 33; 32, 34) are transmissible to the spectrometer or to the similar optoelectronic receiver by the optical waveguide (23) or the optical conductor after passage through the liquid (26) and
- the computer is constructed for evaluation of the modification of the transmitted and dispersed radiation (30) of the light sources (21, 22, 31, 33; 32, 34) in dependence on the switch-on and switch-off state of the light sources (21, 22, 31, 33; 32, 34) and in dependence on the position of the light sources (21, 22, 31, 33; 32, 34).

13. Device according to claim 12, **characterised in that** at least two white-light emitting diodes (21, 22, 31, 33) are mounted at the bypass (24) or riser pipe or throughflow pipe (24) to be offset relative to one another by 90°.

14. Device according to claim 13, **characterised in that** in addition a respective ultraviolet diode (UVED) (32, 34) is mounted in parallel to the white-light emitting diode (21, 22, 31, 33).

**15.** Device according to claim 13 or 14, **characterised in that** in addition a respective IRED (32, 34) is mounted in parallel to the white-light emitting diode 21, 22, 31, 33).

**16.** Device according to claim 14 or 15, **characterised in that** alternately a respective UVED (32, 34) and IRED (32, 34) are mounted in parallel to the white-light emitting diode (21, 22, 31, 33).

**17.** Device according to any one of claims 13 to 16, **characterised in that** a transparent region (29), which is surrounded by a blackened region (25) at the container (24), is provided for each radiation emitter (21, 22, 31, 33; 32, 34) at the bypass (24) or at the riser pipe or throughflow pipe (24).

**18.** Device according to any one of claims 13 to 16, **characterised in that** at least a part of the radiation emitter (21, 22, 31, 33; 32, 34) is arranged remotely from the measuring container (24) and is optically coupled with the coupling-in points (29) at the measuring container (24) by way of optical waveguides (34) of quartz, glass or plastic

**Revendications**

**1.** Procédé pour déterminer sur place et surveiller des états d'impureté de liquides (26) et/ou respectivement en supplément pour contrôler des niveaux de liquide, comprenant au moins deux sources lumineuses (21, 22, 31, 33 ; 32, 34) et un spectromètre ou un récepteur optoélectronique similaire sur un tuyau de montée et/ou tuyau d'écoulement (24) ou sur une dérivation (24), le spectre d'émission, modifié par le liquide (26) et/ou par les impuretés introduites volontairement ou involontairement dans le liquide (26), des sources lumineuses (21, 22, 31, 33 ; 32, 34) étant analysé,
**caractérisé en ce que**

- les sources lumineuses (21, 22, 31, 33; 32, 34) comprennent une diode émettrice de lumière blanche (21, 22, 31, 33) et, en complément de cette diode, une diode d'injection à semi-conducteurs (32, 34) émettant un rayonnement infrarouge ou un rayonnement ultraviolet,
- la diode émettrice de lumière blanche (21, 22, 31, 33) présentant une luminescence d'injection et une photoluminescence, dont les intensités présentent, à l'intérieur d'une plage de courant de flux sélectionnée, en particulier dans la plage des courants de flux de 0,1 mA jusqu'à 100 mA, une proportionnalité qui est suffisamment précise,
- **en ce que** les rayonnements (27, 28, 35, 36, 37, 38) des sources lumineuses (21, 22, 31, 33 ; 32, 34) sont transmis, après le passage à travers le liquide (26) d'un guide d'ondes de lumière (23) ou d'un guide de lumière dans le spectromètre ou dans le récepteur optoélectronique similaire et
- **en ce que** la modification du rayonnement (30) transmis ou du rayonnement (30) diffusé des sources lumineuses (21, 22, 31, 33 ; 32, 34) est analysée en fonction de l'état de connexion et de déconnexion des sources lumineuses (21, 22, 31, 33; 32, 34) et en fonction de la position des sources lumineuses (21, 22, 31, 33 ; 32, 34).

**2.** Procédé selon la revendication 1, **caractérisé en ce que** à chaque fois un rayonnement généré par une LED blanche (21, 22, 31, 33) est injecté de façon décalée de 90° dans la dérivation (24) ou le tuyau de montée et/ou le tuyau d'écoulement (24), afin de pouvoir mesurer aussi bien la transmission que les spectres de diffusion dans la direction de 90°.

**3.** Procédé selon la revendication 2, **caractérisé en ce que**, pour un meilleur décèlement de la diffusion de rayonnement dépendante de la longueur d'onde, du rayonnement de respectivement une diode ultraviolette (UVED) (32, 34) est injecté encore parallèlement au rayonnement généré par la LED blanche (21, 22, 31, 33), laquelle diode entraîne un décèlement de diffusion encore plus clair, étant donné que l'intensité de diffusion augmente rapidement avec la décroissance de la longueur d'onde.

**4.** Procédé selon la revendication 2 ou 3, **caractérisé en ce qu'**un rayonnement de respectivement une IRED (32, 34) est injecté encore parallèlement au rayonnement généré par la LED blanche (21, 22, 31, 33), pour que les processus d'absorption et de diffusion dépendants de la longueur d'onde et dus aux impuretés puissent être interprétés plus clairement.

**5.** Procédé selon la revendication 3 ou 4, **caractérisé en ce que** la tension de flux est contrôlée avec un courant de flux constant de l'une des LED blanches (21, 22, 31, 33) ou également des autres IRED (32, 34) et/ou UVED (32, 34) utilisées et mise en relation réciproque et une indication de température est obtenue à partir de là et des variations de tension de flux sont utilisées pour la correction du décalage de spectres dépendant de la température par un élément de réglage.

6. Procédé selon l'une quelconque des revendications 3 à 5, **caractérisé en ce que**, en alternance avec les rayonnements de la LED blanche (21, 22, 31, 33), à chaque fois un rayonnement d'une UVED (32, 34) et d'une IRED (32, 34) est injecté, afin de mettre à disposition aussi bien des processus de diffusion que des processus d'absorption pour le contrôle et le réglage.

7. Procédé selon l'une quelconque des revendications précédentes, **caractérisé en ce que** les tensions de flux pour la LED (21, 22, 31, 33), de l'UVED (32, 34) et l'IRED (32, 34) sont pulsées, pour que des variations de rayonnement dues aux variations de surface puissent être observées dans les réservoirs de mesure (24).

8. Procédé selon l'une quelconque des revendications précédentes, **caractérisé en ce que** les tensions de flux de la LED (21, 22, 31, 33), de l'UVED (32, 34) et de l'IRED (32, 34) sont modulées, afin de pouvoir différencier différents groupes d'émetteur avec des amplificateurs et/ou des récepteurs sensibles de façon sélective.

9. Procédé selon l'une quelconque des revendications précédentes, **caractérisé en ce que** les pics, les décalages de pic, les intensités intégrales, les rapports de pics entre eux, les accroissements modifiés de tous les flancs des bandes, les intensités intégrales du spectre bleu de la luminescence d'injection et du spectre de la photoluminescence des courbes complétées avec une forme gaussienne et les largeurs de valeur moyenne résultant des données de spectromètre sont analysés sur place avec un PC rapide, par lequel une optimisation et/ou une commande du processus en cours est effectuée également.

10. Procédé selon la revendication 9, **caractérisé en ce que** le second ordre respectif de chaque spectre est utilisé pour l'analyse et en particulier pour la comparaison d'intensité.

11. Procédé selon la revendication 10, **caractérisé en ce que** les spectres sont divisés les uns par les autres ou soustraits par exemple dans le sens avant en cas de modification de l'état du liquide, par exemple modification des impuretés et de leurs concentrations, de sorte que les variations de diffusion et d'absorption peuvent être rendues plus visibles.

12. Dispositif pour déterminer sur place et surveiller des états d'impureté de liquides (26) et/ou respectivement en supplément pour contrôler les niveaux de liquide, comprenant au moins deux sources lumineuses (21, 22, 31, 33 ; 32, 34) et un spectromètre (34) ou un récepteur optoélectronique similaire sur un tuyau de montée ou tuyau d'écoulement (24) ou sur une dérivation (24) et un ordinateur pour l'analyse du spectre d'émission, modifié par le liquide (26) et/ou par les impuretés introduites volontairement ou involontairement dans le liquide (26), des sources lumineuses (21, 22, 31, 33 ; 32, 34),
**caractérisé en ce que**

- les sources lumineuses (21, 22, 31, 33 ; 32, 34) comprennent une diode émettrice de lumière blanche (21, 22, 31, 33) et, en complément de cette diode, une diode d'injection à semi-conducteurs (32, 34) émettant un rayonnement infrarouge ou un rayonnement ultraviolet,
- la diode émettrice de lumière blanche (21, 22, 31, 33) présentant une luminescence d'injection et une photoluminescence, dont les intensités présentent, à l'intérieur d'une plage de flux de courant sélectionnée, en particulier dans la plage des flux de courant de 0,1 mA jusqu'à 100 mA, une proportionnalité qui est suffisamment précise,
- **en ce qu'**un guide d'ondes de lumière (23) ou un guide de lumière est inclus, au moyen duquel les rayonnements (27, 28, 35, 36, 37, 38) des sources lumineuses (21, 22, 31, 33 ; 32, 34) peuvent être transmis après le passage à travers le liquide (26) du guide d'ondes de lumière (23) ou du guide de lumière dans le spectromètre ou dans le récepteur optoélectronique similaire et
- **en ce que** l'ordinateur est conçu pour l'analyse de la modification du rayonnement (30) transmis et du rayonnement (30) diffusé des sources lumineuses (21, 22, 31, 33 ; 32, 34) est conçu en fonction de l'état de connexion et de l'état de déconnexion des sources lumineuses (21, 22, 31, 33 ; 32, 34) et en fonction de la position des sources lumineuses (21, 22, 31, 33 ; 32, 34).

13. Dispositif selon la revendication 12, **caractérisé en ce que** au moins deux LED blanches (21, 22, 31, 33) sont placées sur la dérivation (24) ou le tuyau de montée ou le tuyau d'écoulement (24), décalées réciproquement de 90°.

**14.** Dispositif selon la revendication 13, **caractérisé en ce qu'**une diode ultraviolette (UVED) (32, 34) est placée également parallèlement à chacune des LED blanches (21, 22, 31, 33).

**15.** Dispositif selon la revendication 13 ou 14, **caractérisé en ce qu'**une IRED (32, 34) est placée également parallèlement à chacune des LED blanches (21, 22, 31, 33).

**16.** Dispositif selon la revendication 14 ou 15, **caractérisé en ce que**, en alternance, une UVED (32, 34) et une IRED (32, 34) sont placées parallèlement à chacune des LED blanches (21, 22, 31, 33).

**17.** Dispositif selon l'une quelconque des revendications 13 à 16, **caractérisé en ce que**, pour chaque émetteur de rayonnement (21, 22, 31, 33 ; 32, 34), il est prévu sur la dérivation (24) ou sur le tuyau de montée ou le tuyau d'écoulement (24) une zone (29) transparente qui est entourée par une zone (25) noircie sur le réservoir (24).

**18.** Dispositif selon l'une quelconque des revendications 13 à 16, **caractérisé en ce qu'**au moins une partie des émetteurs de rayonnement (21, 22, 31, 33 ; 32, 34) est disposée à distance du réservoir de mesure (24) et est couplée optiquement par des guides d'ondes de lumière (34) en quartz, verre ou plastique (POF) avec les points d'injection (29) sur le réservoir de mesure (24).

Fig. 1

Fig. 5

Fig. 6

ALLE BEZÜGE ZUR FIGUREN 2-4, 7-13 WERDEN ALS UNGÜLTIG BETRACHTET

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9735178 A1
- EP 1111333 A1
- US 6315955 B
- DE 4336520 A1
- DE 19521326 A1
- DE 19806560 A1
- DE 19857845 A1
- DE 19625622 A1
- DE 19638667 A1


**In der Beschreibung aufgeführte Nicht-Patentliteratur**

- **S. Nakamura ; G. Fasol.** The Blue Laser Diode. Springer-Verlag, 1997
- **P. Schlotter ; R. Schmidt ; J. Schneider.** Luminescence or blue light emitting diodes. *Appl. Phys.,* 1997, vol. A64, 417-418
- **J. Baur ; P. Schlotter ; J. Schneider.** White light emitting diode. *Festkörperprobleme,* 1998, vol. 37, 67-78